Europäisches Patentamt

European Patent Office

Office européen des brevets

(19)

(11) **EP 0 565 485 B1**

(12) **EUROPÄISCHE PATENTSCHRIFT**

(45) Veröffentlichungstag und Bekanntmachung des Hinweises auf die Patenterteilung:
**15.05.1996 Patentblatt 1996/20**

(51) Int Cl.⁶: **G01F 1/36**, G01F 1/50, G01F 1/42

(21) Anmeldenummer: **93810210.0**

(22) Anmeldetag: **24.03.1993**

(54) **Verfahren und Vorrichtung zum Messen der Durchflussmenge eines Mediums und Anwendung des Verfahrens**

Method and device to measure the flow of a medium and application of the method

Procédé et dispositif pour la mesure de l'écoulement d'une substance et application du procédé

(84) Benannte Vertragsstaaten:
**CH DE FR GB IT LI NL**

(30) Priorität: **08.04.1992 CH 1143/92**

(43) Veröffentlichungstag der Anmeldung:
**13.10.1993 Patentblatt 1993/41**

(73) Patentinhaber: **EMILE EGGER & CO. AG CH-2088 Cressier (CH)**

(72) Erfinder: **Grimm, Michel CH-2072 St-Blaise (CH)**

(74) Vertreter:
**AMMANN PATENTANWAELTE AG BERN
Schwarztorstrasse 31
CH-3001 Bern (CH)**

(56) Entgegenhaltungen:
EP-A- 0 086 259    EP-A- 0 370 557
DE-A- 3 738 925    GB-A- 2 026 704
GB-A- 2 207 767    US-A- 3 875 955

• **SIEMENS ZEITSCHRIFT Bd. 40, Nr. 3, März 1966, ERLANGEN DE Seiten 178 - 183 H. CALAME 'Durchflussmessung und -regelung bei extrem grossen Bereichen mit Segmentblendenschieber'**

Printed by Jouve, 75001 PARIS (FR)

**Beschreibung**

Die vorliegende Erfindung betrifft ein Verfahren zum Messen der Durchflussmenge eines Mediums gemäss Oberbegriff des Anspruchs 1.

Ein solches Verfahren ist aus der GB-A-2 207 767 bekannt, wobei ein Blendenschieber mit quadratischer zentralsymmetrischer Oeffnung verwendet wird. Die Durchflussmenge wird anhand von Eichwerten bestimmt, was mit einem erheblichen Aufwand verbunden ist, besonders wenn Durchflussmengen an Blendenschiebern unterschiedlicher Abmessungen zu messen sind.

Die US-A-3 875 955 beschreibt ein digitales Mess- oder Steuerungssystem für die Durchflussmenge einer Flüssigkeit oder eines Gases, mit einer Vielzahl von individuell betätigbaren Ventilelementen, welche jeweils entweder geöffnet oder geschlossen sind und zusammen eine Durchflussöffnung bilden. Die Durchflussmenge ist das Produkt eines zu messenden Durchflussparameters und einer binären, experimentell ermittelten und abgespeicherten Zahl, welche die Summe der normierten Durchflussmengen der geöffneten Ventilelemente darstellt. Mittels dieser Zahl wird für eine bestimmte Konfiguration der Ventilelemente die Durchflussmenge ermittelt und zur Korrektur der Konfiguration herangezogen, solange, bis der Durchflussparameter konstant bleibt, oder eine erwünschte Durchflussmenge erreicht wird. Da die Anzahl der möglichen verschiedenen Öffnungsflächen begrenzt ist und die gesamte Fläche der geöffneten Ventilelemente lediglich schrittweise geändert werden kann, ist es nicht möglich, die Durchflussmenge kontinuierlich als Funktion der Öffnungsfläche zu ermitteln. Weiterhin erfordert eine hohe Anzahl von möglichen Öffnungsflächen eine relativ grosse Anzahl von Ventilelementen, welche jeweils beim Öffnen und Schliessen die Strömung des Mediums stören und somit die Genauigkeit der Messung beeinträchtigen.

Aus der EP-A-0 370 557 ist ein ähnliches Messverfahren bekannt, wobei aber die Blendenöffnung in verhältnismässig groben Schritten, z.B. fünf Schritten von der geschlossenen zur ganz offenen Blende, verstellt wird, wobei die Blende automatisch in Abhängigkeit vom Druckabfall an der Blende verstellt wird. Für jede Blendenstellung ist ein durch Eichung ermittelter Kennwert ($K_V$-Wert) abgespeichert, anhand dessen für den ganzen jeweiligen Messbereich bei einer bestimmten Blendenstellung der Durchfluss berechnet wird. Die Blende hat keine sich ähnlich bleibende, zentralsymmetrische Oeffnung, und es ist daher nicht möglich, bei kontinuierlicher Verstellung der Blende den Kennwert anhand einer gleichbleibenden Formel zu berechnen. Es entfallen auch alle übrigen Vorteile einer zentralsymmetrischen, sich ähnlich bleibenden Blendenöffnung. Eine Durchflussregelung ist infolge der unstetigen Blendenverstellung nicht möglich.

Aus der DE-A-37 38 925 ist es auch bekannt, den Durchfluss durch einen Segment-Blendenschieber laufend zu berechnen. Die Berechnungsformel ist jedoch sehr kompliziert, was einen entsprechend aufwendigen Rechner erfordert. Im übrigen herrschen nur bis zu einer Blendenöffnung von etwa 35 % stabile Verhältnisse, die eine korrekte rechnerische Erfassung erlauben, und zudem gilt die Berechnungsformel nur für eine bestimmte Geschwindigkeit bzw. Reynold'sche Zahl.

Ziel vorliegender Erfindung ist es, über einen grossen Regelbereich bei ausgezeichneter Stabilität nach einer einfachen, genügend genauen Näherungsberechnung die Durchflussmenge kaufend zu erfassen, und dies insbesondere auch bei sehr kleinen Blendenöffnungen. Dieses Ziel wird gemäss Anspruch 1 erreicht. Es wird damit möglich, eine genügende Messgenauigkeit auf rein rechnerischem Wege zu erzielen, ohne dass die Erfassung und Abspeicherung einer grossen Zahl von Eichwerten erforderlich wäre. Der Blendenschieber mit zentralsymmetrischer mehreckiger Oeffnung ist ganz besonders auch geeignet zur Messung des Durchflusses verunreinigter, feststoffhaltiger Medien. Die erwähnten günstigen Charakteristiken gelten dabei sowohl für Flüssigkeiten als auch für Gase.

Die Erfindung betrifft auch eine Messvorrichtung gemäss Anspruch 5 sowie eine Anwendung des Messverfahrens gemäss Ansprüchen 7 und 8.

Die Erfindung wird nun anhand der Zeichnungen näher erläutert.

Fig. 1 zeigt schematisch eine erfindungsgemässe Messvorrichtung,

Fig. 2 und 3 zeigen Ausführungsbeispiele des Profils von Segmenten bzw. Oeffnungen des Blendenschiebers,

Fig. 4 zeigt eine Messkurve für einen bestimmten Blendenschieber, und

Fig. 5 zeigt für den selben Blendenschieber den $K_V$-Wert in Funktion der Blendenöffnung.

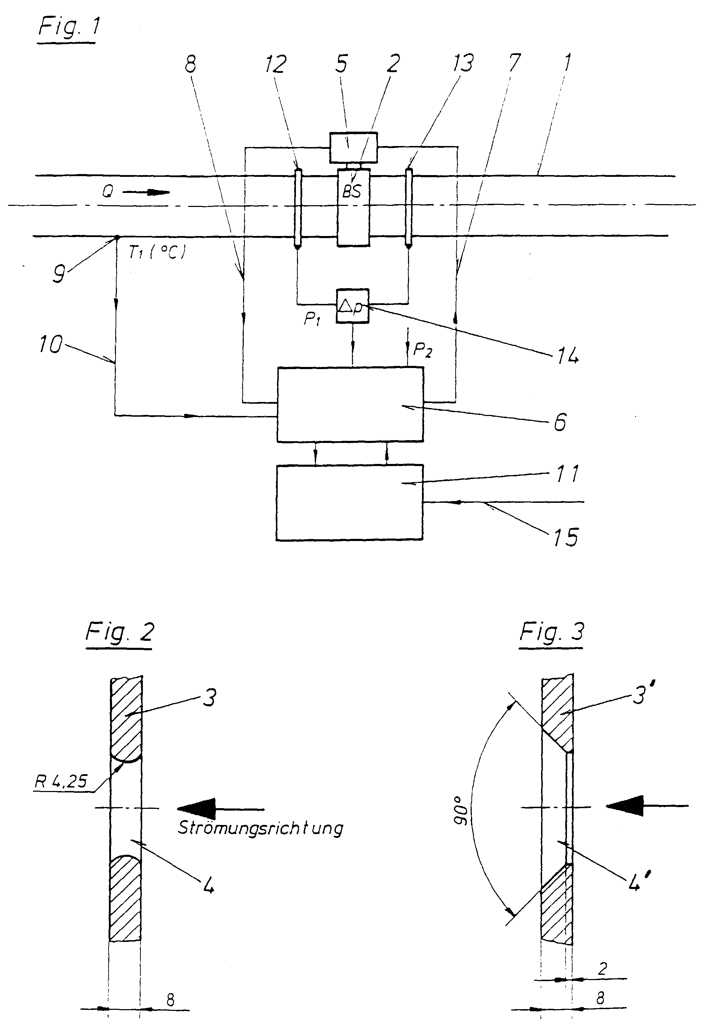

Die in Fig. 1 dargestellte Messvorrichtung dient der Messung und Regelung der Durchflussmenge eines Gases oder einer Flüssigkeit durch eine Rohrleitung 1. In diese Rohrleitung ist ein Blendenschieber 2 eingebaut. Es kann sich hierbei um einen Blendenschieber gemäss CH-A-369 943 oder aber gemäss Prospekt "Blenden-Regulierschieber" der Anmelderin handeln. Diese Blendenschieber sind üblicherweise mit 6 aufeinander verschiebbaren Blendenelementen 3 bzw. 3' gemäss Fig. 2 oder 3 versehen, die eine sechseckige Blendenöffnung 4 bzw. 4' gemäss Fig. 2 und 3 definieren. Bei der Verstellung des Blendenschiebers gleiten die Kanten der Elemente 3 bzw. 3' aufeinander, was einen erwünschten Reinigungseffekt ergibt. Im übrigen ist eine kontinuierliche Regelung von einer maximalen Blendenöffnung bis zum praktisch völligen Abschluss möglich. In den Fig. 2 und 3 sind Angaben eingetragen, wie die Blendenelemente bemessen sein können. Gemäss Fig. 2 weisen Blendenelemente mit einer Dikke von 8 mm an den die Blendenöffnung 4 definierenden Kanten eine zylindrische Fläche mit einem Radius von 4,25 mm auf. Die Blendenelemente 3' gemäss Fig. 3 weisen eine relativ scharfe Kante auf der in Strömungsrichtung vorderen Seite auf, an welche sich eine schräge Fläche anschliesst, die um 45° geneigt ist.

Der Blendenschieber 2 ist mit einem Antrieb 5 verbunden, welcher von einem Rechen- und Steuergerät 6 über eine Leitung 7 gesteuert werden kann. Im Antrieb 5 ist ein Stellungsgeber vorgesehen, welcher über eine Leitung 8 ein Stellungssignal an den Rechner 6 übermittelt. In Strömungsrichtung des Mediums vor dem Blendenschieber 2 ist ein Temperaturmessfühler 9 angeordnet, welcher über eine Leitung 10 dem Rechner 6 und einer Anzeige 11 ein Signal zuführt, welches der Temperatur des Mediums entspricht. Dieser Temperaturfühler wird im allgemeinen nur angeordnet, wenn es um die Messung der Durchflussmenge eines Gases geht. Beidseitig des Blendenschiebers 2 sind Drucksensoren 12 bzw. 13 angeordnet, die über eine Messschaltung 14 dem Rechner 6 ein Signal zuführen, welches der Druckdifferenz des Mediums vor und nach dem Blendenschieber entspricht. Ueber eine Leitung 15 kann der Anzeige 11 und dem Rechner 6 ein Sollwertsignal zugeführt werden.

Es ist an sich einleuchtend, dass die Durchflussmenge Q einerseits vom Druckabfall am Blendenschieber und andererseits von der Stellung des Blendenschiebers bzw. dessen Oeffnung abhängt. Der Rechner 6 muss daher im Stande sein, aus den die Blendenstellung und den Druckabfall kennzeichnenden Signalen die Durchflussmenge zu berechnen und auf der Anzeige 11 anzuzeigen, wo zugleich auch die Temperatur, der Sollwert und eventuell auch weitere Werte, insbesondere die Blendenstellung und der Druckabfall an der Blende, angezeigt werden können.

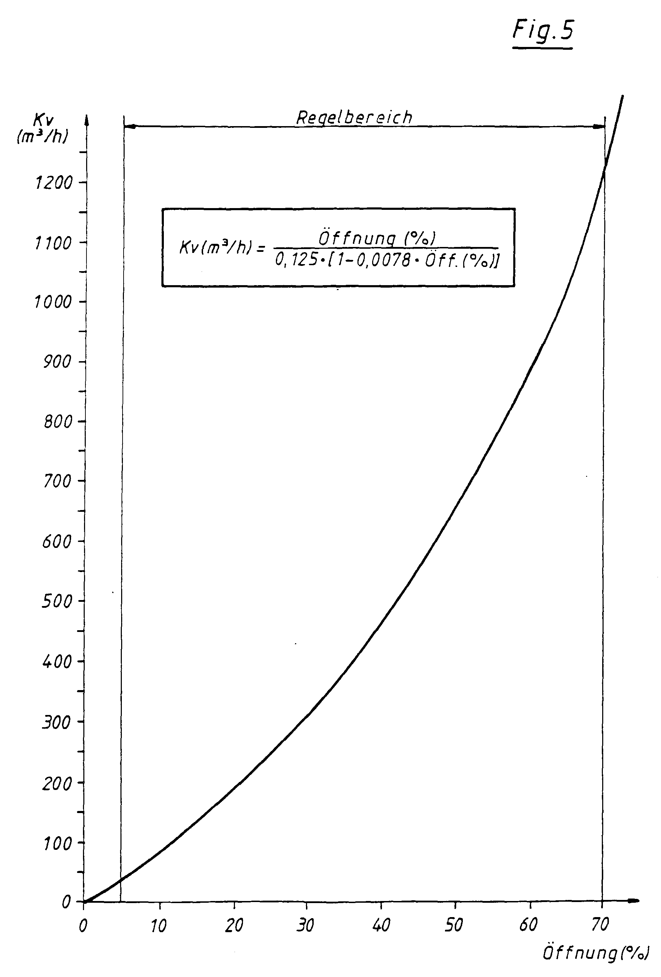

Wie schon erwähnt, sind die Charakteristiken des Blendenschiebers besonders günstig und stabil für alle Blendenstellungen von der geschlossenen bis zur voll geöffneten Stellung. Fig. 5 zeigt für einen bestimmten Blendenschieber mit einer Stutzenweite von 150 mm den Verlauf des Kv-Wertes in Funktion der prozentualen Blendenöffnung. Dieser Wert ist eine massgebende Grösse zur Berechnung der Durchflussmenge in Funktion des Druckabfalls am Blendenschieber. Für eine Flüssigkeit kann die Durchflussmenge gemäss Formel 1 berechnet werden:

$$Qw = K_v \cdot \sqrt{\Delta p} \ m^3/h \tag{1}$$

Für Luft kann die Durchströmungsmenge nach folgender Formel berechnet werden:

$$Q1 = 514 \cdot K_v \cdot \sqrt{\frac{\Delta p \cdot p2}{Rh0 \cdot T1}} \ m^3/h \tag{2}$$

(gilt für p2 ≧ p1/2) worin

$\Delta p$ =   Druckabfall am Blendenschieber,

p2 =   Druck nach dem Blendenschieber,

Rh0 =   Dichte des Gases, und

T1 =   Temperatur vor dem Blendenschieber in °C.

Es hat sich nun gezeigt, dass unter den gegebenen Bedingungen der $K_v$-Wert in allen Fällen approximativ mit einem geringen Fehler berechnet werden kann, nach der Formel:

$$K_v = \frac{Oeffnung \ \%}{A \cdot (1 - B \cdot Oeffnung \ \%)} \ m^3/h$$

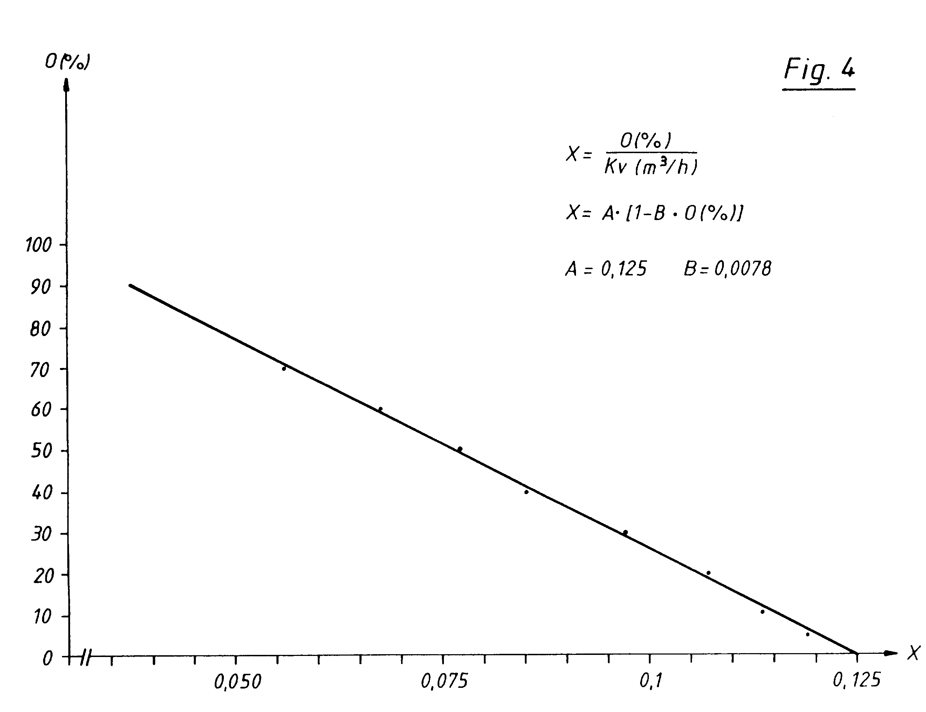

Fig. 4 zeigt das Ergebnis von Messungen an einem Blendenschieber gemäss Fig. 2 mit sechseckiger Oeffnung mit einer Stutzenweite von 150 mm. Die Drucksensoren 12 und 13 liegen in einm Abstand von 150 mm von der Blendenebene und beidseitig der Blende ist eine Beruhigungsstrecke ohne Krümmung oder Querschnittsveränderung von 3D = 450 mm vorgesehen. Fig. 4 zeigt, dass die Messpunkte mit einer gewissen Streuung längs einer Geraden liegen, welche durch die allgemeine Gleichung X = A x (1 - B · 0 %) definiert werden kann, worin A und B Konstanten und 0 die Oeffnung des Blendenschiebers in % ist. Für die Fig. 4 dargestellten und oben angegebenen Verhältnisse ergeben sich folgende Werte für die Faktoren A und B:

A = 0,125
B = 0,0078

Diese Werte können nun für jeden bestimmten eingesetzten Blendenschieber dem Rechner 6 eingegeben werden, und gestützt lediglich auf diese Werte, kann der Rechner aus den erfassten Grössen p1, p2 und T1 nach den Formeln 1) bzw. 2) den Durchfluss bestimmen. Im übrigen muss der Rechner lediglich so vorbereitet werden, dass er die Berechnung entweder nach der Formel 1) oder nach der Formel 2) vornimmt, je nach dem, ob der Durchfluss einer Flüssigkeit oder eines Gases zu erfassen ist. Bei der Messung der Durchflussmenge einer Flüssigkeit wird im übrigen normalerweise kein Temperaturfühler 9 vorgesehen und der Rechner empfängt daher kein Temperatursignal. Es wäre daher auch möglich, dass der Rechner automatisch den Durchfluss einer Flüssigkeit berechnet, wenn er kein Temperatursignal empfängt und umgekehrt, die Durchflussmenge eines Gases gemäss Formel 2) berechnet, wenn er ein Temperatursignal empfängt. Im übrigen kann der Rechner zugleich der Regelung einer Durchflussmenge dienen, indem er den Blendenschieber auf den eingegebenen Sollwert regelt.

Die oben erwähnte Formel zur Berechnung des $K_v$-Wertes mit dem linearen Zusammenhang im Nenner stellt eine im allgemeinen genügende Näherung für eine Messung auf wenige Prozent genau dar. Wenn höhere Genauigkeit verlangt wird, kann es erforderlich sein, ausser dem linearen Glied $B \cdot \text{Oeffnung \%}$ noch ein quadratisches und eventuell ein kubisches Glied zu berücksichtigen, so dass nach einer Formel

$$K_v = \frac{\text{Öffnüng \%}}{A \cdot (1 - B \cdot \text{Öffnung \%} - C \cdot \text{Öffnung \%}^2 - D \cdot \text{Öffnüng \%}^3)}$$

berechnet würde.

Weitere besondere Vorteile des Blendenschiebers bei der Messung und eventuellen Regelung des Durchflusses sind oben erwähnt worden. Der Rechner 6 kann insbesondere so gestaltet sein, dass er bei einem übermässig schnellen Anstieg des Druckabfalls $\Delta p$ ohne entsprechende Verstellung des Blendenschiebers den Blendenschieber kurzfristig öffnet und wieder schliesst. Der Druckanstieg dürfte nämlich in diesem Falle von einer Verstopfung herrühren, welche durch das vorübergehende Oeffnen des Blendenschiebers beseitigt werden kann.

Eine besonders interessante Anwendung des gemäss der Erfindung geregelten Blendenschiebers ergibt sich bei der Belüftung des Belebungsbeckens einer Kläranlage, in welchem der Sauerstoffgehalt auf einen bestimmten Wert zu regeln ist. Zu diesem Zweck wird dem Rechner 6 ein Sollwert vorgegeben, der mit dem ständig ermittelten Istwert verglichen wird und gemäss dem Vergleich wird der Blendenschieber geregelt, um die zugeführte Belüftungsmenge zu drosseln oder zu erhöhen.

**Patentansprüche**

1. Verfahren zum Messen der Durchflussmenge (Q) eines Mediums, wobei der Druckabfall ($\Delta p$) im strömenden Medium an einem regelbaren Drosselorgan (2) erfasst und aus der Stellung des Drosselorgans (2) und dem Druckabfall auf die Durchflussmenge geschlossen wird, wobei als Drosselorgan ein Blendenschieber (2) mit einer zentralsymmetrischen, mehreckigen Oeffnung verwendet wird, dadurch gekennzeichnet, dass die kontinierlich veränderbare Stellung des Blendenschiebers laufend erfasst und in Abhängigkeit der Stellung des Blendenschiebers (2) dessen $K_v$-Wert laufend während der Messung berechnet wird, und dass aus diesem $K_v$-Wert und dem Druckabfall ($\Delta p = p_1 - p_2$) die Durchflussmenge (Q) berechnet wird.

2. Verfahren nach Anspruch 1, dadurch gekennzeichnet, dass der $K_v$-Wert näherungsweise gemäss der Formel

$$K_v = \frac{\text{Oeffnung \%}}{A \cdot (1 - B \cdot \text{Oeffnung \%})} \ m^3/h$$

berechnet wird, wobei A und B von den Abmessungen des Blendenschiebers (2) abhängige Werte sind.

3. Verfahren nach Anspruch 1 oder 2, dadurch gekennzeichnet, dass der Blendenschieber (2) auf eine dem Rechner (6) eingegebene Sollstellung geregelt wird.

4. Verfahren nach einem der Ansprüche 1 bis 3, dadurch gekennzeichnet, dass bei einem eine bestimmte Grenzgeschwindigkeit überschreitenden Anstieg des Druckabfalles ($\Delta p$) der Blendenschieber (2) vorübergehend geöffnet wird.

5. Messvorrichtung zur Durchführung des Verfahrens nach Anspruch 1, mit einem Blendenschieber (2) mit einer zentralsymmetrischen, mehreckigen Oeffnung, Messonden (12, 13) zur Ermittlung des Druckes vor und nach dem Blendenschieber und einen Geber (5) zur Ermittlung der Stellung des Blendenschiebers (2), dadurch gekennzeichnet, daß die Stellung des Blendenschiebers (2) kontinuierlich veränderbar ist, und daß ein Rechner (6) zur Berechnung der Durchflussmenge aus den Signalen des Stellungsgebers (5) und der Messonden (12, 13) aus einem während der Messung laufend berechneten $K_v$-Wert vorgesehen ist.

**6.** Vorrichtung nach Anspruch 5, gekennzeichnet durch eine Temperatursonde (9) zur Ermittlung der Temperatur (T1) eines Gases vor dem Blendenschieber (2).

**7.** Vorrichtung nach Anspruch 5 oder 6, gekennzeichnet durch einen Blendenschieber dessen Blendenelemente (3) mit ihren Kanten aufeinander gleiten.

**8.** Vorrichtung nach Anspruch 7, dadurch gekennzeichnet, dass der Blendenschieber eine sechseckige Oeffnung (4) aufweist.

**9.** Anwendung des Verfahrens nach Anspruch 1, dadurch gekennzeichnet, dass die Stellung des Blendenschiebers (2) auf einen Sollwert geregelt wird, um den Durchfluss auf einen Sollwert zu regeln.

**10.** Anwendung nach Anspruch 7 zur Belüftung eines Belebungsbeckens, dadurch gekennzeichnet, dass der Sauerstoffgehalt im Becken ermittelt und die zugeführte Luftmenge über den Blendenschieber zur Regelung des Sauerstoffgehaltes geregelt wird.

## Claims

**1.** Method for measuring the flow (Q) of a medium, the pressure drop ($\Delta p$) produced in the flowing medium by an adjustable throttle member (2) being detected and the flow being deduced from the position of said throttle member (2) and from said pressure drop, said throttle member being in the form of a diaphragm valve (2) having a centrally symmetrical, polygonal opening, characterised in that the continuously adjustable position of said diaphragm valve is permanently detected and the $C_v$ value of the diaphragm valve (2) in function of its position is continuously calculated during the measure, and in that the flow (Q) is calculated on the base of said $C_v$ value and of said pressure drop ($\Delta p = p_1 - p_2$).

**2.** Method according to claim 1, characterised in that said $C_v$ value is calculated approximately according to the formula

$$C_v = \frac{\text{opening \%}}{A \cdot (1 - B \cdot \text{opening \%})} \ m^3/h,$$

the values A and B varying in function of the dimensions of the diaphragm valve (2).

**3.** Method according to claim 1 or 2, characterised in that the diaphragm valve (2) is adjusted to a set-point position which is programmed in the computer (6).

**4.** Method according to one of claims 1 to 3, characterised in that the diaphragm valve (2) is temporarily opened in the case of an increase of the pressure drop ($\Delta p$) exceeding a given limit speed.

**5.** Measuring device for implementing the method according to claim 1, comprising a diaphragm valve (2) having a centrally symmetrical, polygonal opening, measuring sensors (12, 13) for the detection of the pressure upstream and downstream of the diaphragm valve, and a detector (5) for the detection of the position of the diaphragm valve (2), characterised in that the position of the diaphragm valve (2) is continuously adjustable, and in that a computer (6) is provided in order to calculate the flow on the base of the signals from said position detector (5) and said measuring sensors (12, 13) and on the base of a $C_v$ value which is permanently calculated during the measuring procedure.

**6.** Device according to claim 5, characterised by a temperature sensor (9) for the detection of the temperature (T1) of a gas upstream of the diaphragm valve (2).

**7.** Device according to claim 5 or 6, characterised by a diaphragm valve whose diaphragm elements (3) slide on each other by their edges.

**8.** Device according to claim 7, characterised in that the diaphragm valve has a hexagonal opening (4).

**9.** Application of the method according to claim 1, characterised in that the position of the diaphragm valve (2) is adjusted to a set-point position in order to regulate the flow at a set value.

10. Application according to claim 7 for the aeration of an activated sludge pond, characterised in that the oxygen concentration in the pond is determined and the air supply is regulated by means of the diaphragm valve in order to regulate the oxygen concentration.

## Revendications

1. Procédé pour mesurer le débit (Q) d'une matière, la chute de pression ($\Delta p$) du flux de matière provoquée par un élément d'étranglement (2) étant détectée et le débit étant déduit de la position dudit élément d'étranglement (2) et de ladite chute de pression, et un élément d'étranglement sous forme d'une vanne à diaphragme (2) ayant une ouverture polygonale à symétrie centrale étant utilisé, caractérisé en ce que la position continuellement variable de ladite vanne à diaphragme est continuellement détectée, que la valeur $C_v$ de la vanne à diaphragme (2) en fonction de sa position est continuellement calculée pendant la mesure position, et que ledit débit (Q) est calculé sur la base de ladite valeur $C_v$ et de ladite chute de pression ($\Delta p = p_1 - p_2$).

2. Procédé selon la revendication 1, caractérisé en ce que ladite valeur $C_v$ est calculée approximativement selon la formule

$$C_v = \frac{\text{ouverture \%}}{A \cdot (1 - B \cdot \text{ouverture \%})} \ m^3/h,$$

A et B étant des valeurs qui varient en fonction des dimensions de ladite vanne à diaphragme (2).

3. Procédé selon la revendication 1 ou 2, caractérisé en ce que la vanne à diaphragme (2) est amenée à une position de consigne programmée dans l'ordinateur (6).

4. Procédé selon l'une des revendications 1 à 3, caractérisé en ce que la vanne à diaphragme (2) est momentanément ouverte lorsque la montée de la chute de pression ($\Delta p$) dépasse une vitesse-limite donnée.

5. Dispositif de mesure pour la mise en oeuvre du procédé selon la revendication 1, comprenant une vanne à diaphragme (2) ayant une ouverture polygonale à symétrie centrale, des sondes de mesure (12, 13) pour détecter la pression en amont et en aval de la vanne à diaphragme, et un détecteur (5) pour détecter la position de la vanne à diaphragme, caractérisé en ce que la position de la vanne à diaphragme est continuellement variable, et qu'un ordinateur (6) est prévu pour calculer le débit sur la base des signaux dudit détecteur de position (5) et desdites sondes de mesure (12, 13) et sur la base d'une valeur $C_v$ continuellement calculée au cours de la mesure.

6. Dispositif selon la revendication 5, caractérisé par une sonde de température (9) pour détecter la température (T1) d'un gaz en amont de la vanne à diaphragme (2).

7. Dispositif selon la revendication 5 ou 6, caractérisé par une vanne à diaphragme dont les éléments de diaphragme (3) glissent l'un sur l'autre par leurs bords.

8. Dispositif selon la revendication 7, caractérisé en ce que la vanne à diaphragme présente une ouverture (4) hexagonale.

9. Application du procédé selon la revendication 1, caractérisée en ce que la la vanne à diaphragme (2) est amenée à une position de consigne afin de régler le débit à une valeur de consigne.

10. Application selon la revendication 7 pour l'aération d'un bassin d'activation, caractérisée en ce que la concentration d'oxygène dans le bassin est déterminée et l'admission d'air est réglée par l'intermédiaire de la vanne à diaphragme afin de régler la concentration d'oxygène.

Fig. 1

Fig. 2

Fig. 3

7

Fig. 4

$$X = \frac{O(\%)}{Kv\ (m^3/h)}$$

$$X = A \cdot [1 - B \cdot O(\%)]$$

$$A = 0,125 \qquad B = 0,0078$$

EP 0 565 485 B1

*Fig.5*

$$Kv(m^3/h) = \frac{\text{Öffnung (\%)}}{0,125 \cdot [1-0,0078 \cdot \text{Öff. (\%)}]}$$